# EUROPÄISCHE PATENTANMELDUNG

(11) **EP 0 969 678 A2**
(43) Veröffentlichungstag der Anmeldung: **05.01.2000**
(21) Anmeldenummer: 99112014.8
(22) Anmeldetag: 22.06.1999
(51) Int. Cl.: H04Q 3/66, H04M 7/00

(54) **Verfahren zur Übertragung von Audio- und/oder Videodaten zwischen Telekommunikationsendgeräten**

(30) Priorität: 01.07.1998 DE 19829421
(71) Anmelder: ROBERT BOSCH GMBH, 70442 Stuttgart (DE)
(72) Erfinder: Schmoll, Klaus-Peter, 74251 Lehrensteinsfeld (DE); Maier, Wolfgang, 63225 Langen (DE); Haack, Reiner, 55452 Ruemmelsheim (DE)

(57) **Zusammenfassung**

Es wird ein Verfahren zur Übertragung von Audio- und/oder Videodaten zwischen Telekommunikationsendgeräten (1, 5) vorgeschlagen, das eine Kostenreduzierung für eine Verbindung zwischen den Telekommunikationsendgeräten (1, 5) ermöglicht.

Dabei wird an einem ersten Telekommunikationsendgerät (1) ein Teilnehmer angewählt. In einer an das erste Telekommunikationsendgerät (1) angeschlossenen ersten Telekommunikationseinheit (15), insbesondere einer Nebenstellenanlage oder einer in das erste Telekommunikationsendgerät (1) integrierten ersten Telekommunikationseinheit (15) wird geprüft, über welches eine Mehrzahl von verschiedenen Telekommunikations- und/oder Datennetzen (65, 70, 75, 80), mit denen das erste Telekommunikationsendgerät (1) über jeweils einen Netzbetreiber (81, 85, 90, 95) verbindbar ist, eine Verbindung zu dem angewählten Teilnehmer mit minimalen Verbindungskosten einrichtbar ist. Von der ersten Telekommunikationseinheit (15) wird ein Verbindungsaufbau über denjenigen Netzbetreiber (81, 85, 90, 95) zum angewählten Teilnehmer eingeleitet, der die Audio- und/oder Videodaten über das ihm zugeordnete Telekommunikations- und/oder Datennetz (65, 70, 75, 80) mit den geringsten Verbindungskosten zwischen dem ersten Telekommunikationsendgerät (1) und dem angewählten Teilnehmer überträgt.

## Beschreibung

### Stand der Technik

Die Erfindung geht von einem Verfahren zur Übertragung von Audio- und/oder Videodaten zwischen Telekommunikationsendgeräten nach der Gattung des Hauptanspruchs aus.

Aus der Zeitschrift 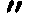 Online + Computer, Das Magazin für Online und Multimedia", Ausgabe 3/97 ist bereits bekannt, bei einem Anrufer eine Soundkarte vorzusehen, die in ein Mikrofon gesprochene Sätze digitalisiert. Eine Telefonie-Software zerlegt dann den Datenstrom in kleine Pakete, die über das Internet zum Empfänger geschickt werden. Dort setzt das Programm alle Datenpakete wieder in der richtigen Reihenfolge zusammen. Mittels einer speziellen Soundkarte ist auch ein Vollduplexbetrieb beim Telefonieren im Internet möglich. Über das Internet können dabei Audio- und Videodaten übertragen werden.

### Vorteile der Erfindung

Das erfindungsgemäße Verfahren mit den Merkmalen des Hauptanspruchs hat demgegenüber den Vorteil, daß an einem ersten Telekommunikationsendgerät ein Teilnehmer angewählt wird, daß in einer an das erste Telekommunikationsendgerät angeschlossenen oder in das erste Telekommunikationsendgerät integrierten ersten Telekommunikationseinheit geprüft wird, über welches einer Mehrzahl von verschiedenen Telekommunikations- und/oder Datennetzen, mit denen das erste Telekommunikationsendgerät über jeweils einen Netzbetreiber verbindbar ist, eine Verbindung zu dem angewählten Teilnehmer mit minimalen Verbindungskosten einrichtbar ist, und daß von der ersten Telekommunikationseinheit ein Verbindungsaufbau über denjenigen Netzbetreiber zum angewählten Teilnehmer eingeleitet wird, der die Audio- und/oder Videodaten über das ihm zugeordnete Telekommunikations- und/oder Datennetz mit den geringsten Verbindungskosten zwischen dem ersten Telekommunikationsendgerät und dem angewählten Teilnehmer überträgt. Auf diese Weise kann von der ersten Telekommunikationseinheit automatisch die kostengünstigste Verbindung zwischen Telekommunikationsendgeräten hergestellt werden. Die erste Telekommunikationseinheit kann also für den Verbindungsaufbau das kostengünstigste analoge oder digitale Telekommunikations- und/oder Datennetz auswählen, so daß dies nicht vom Benutzer eines Telekommunikationsendgerätes selbst ausgewählt werden muß, wodurch der Bedienkomfort für den Benutzer erheblich gesteigert wird. Durch Konzentration dieser Auswahlfunktion in einer als Nebenstellenanlage ausgebildeten ersten Telekommunikationseinheit können Aufwand und Kosten bei der Herstellung und Einstellung mehrerer an die Nebenstellenanlage anschließbarer Telekommunikationsendgeräte eingespart werden. Als Telekommunikationsendgeräte können daher auch sogenannte Stimulus-Apparate verwendet werden, die mit einem Minimum an erforderlichen Funktionen ausgestattet und daher besonders preisgünstig hergestellt werden können.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist es, daß die Verbindungskosten der Netzbetreiber für die verschiedenen zugänglichen Telekommunikations- und/oder Datennetze in der ersten Telekommunikationseinheit durch Übertragung über das Telekommunikations- und/oder Datennetz aktualisiert werden, an das die erste Telekommunikationseinheit angeschlossen ist. Auf diese Weise muß sich der Benutzer auch nicht um die Aktualisierung dieser Daten kümmern, so daß der Bedienkomfort für den Benutzer weiter erhöht wird.

Vorteilhaft ist weiterhin, daß von der ersten Telekommunikationseinheit vor die Rufnummer des angewählten Teilnehmers eine Vorwahl für dasjenige Telekommunikations- und/oder Datennetz eingefügt wird, durch das die Verbindung zu dem angewählten Teilnehmer mit den geringsten Verbindungskosten eingerichtet wird. Auf diese Weise wird dem Benutzer auch der Verbindungsaufbau von der ersten Telekommunikationseinheit abgenommen, so daß er nur die übliche Rufnummer des von ihm gewünschten Zielteilnehmers eingeben muß, nicht jedoch die Vorwahl für den entsprechend günstigsten Netzbetreiber. Der Bedienkomfort für den Benutzer wird somit nochmals erhöht.

Besonders vorteilhaft ist es, daß die Audio- und/oder Videodaten analog am ersten Telekommunikationsendgerät eingegeben werden und daß die analogen Audio- und/oder Videodaten in der ersten Telekommunikationseinheit digitalisiert werden. Auf diese Weise kann auch ein Analog-/Digitalwandler kostensparend für alle an einer als Nebenstellenanlage ausgebildeten ersten Telekommunikationseinheit angeschlossenen Telekommunikationsendgeräte in der ersten Telekommunikationseinheit zentralisiert angeordnet werden.

Ein weiterer Vorteil besteht darin, daß die digitalisierten Audio- und/oder Videodaten vor Abgabe an das zweite Telekommunikationsendgerät in der zweiten Telekommunikationseinheit in analoge Audio- und/oder Videodaten umgewandelt werden. Auch auf diese Weise können Kosten für die an einer als Nebenstellenanlage ausgebildeten zweiten Telekommunikationseinheit angeschlossenen Telekommunikationsendgeräte eingespart werden, indem ein entsprechender Digital-/Analogwandler in der zweiten Telekommunikationseinheit zentralisiert angeordnet wird.

Ein weiterer Vorteil besteht darin, daß in der ersten Telekommunikationseinheit eine am ersten Telekommunikationsendgerät eingegebene Rufnummer in eine Adresse des digitalen Telekommunikations- und/oder Datennetzes umgewandelt wird. Auf diese Weise wird zusätzlich Funktionalität in der ersten Telekommunikationseinheit zentralisiert und der für die Herstellung der an der ersten Telekommunikationseinheit angeschlossenen Telekommunikationsendgeräte erforderliche Aufwand kostensparend reduziert.

Ein weiterer Vorteil besteht darin, daß von der ersten Telekommunikationseinheit mindestens ein Datenkanal, vorzugsweise ein B-Kanal mit einer Datenrate von 64 kBit/s nach dem ISDN-Standard (Integrated Services Data Network), zur Übertragung der digitalisierten Audio- und/oder Videodaten an den angewählten Teilnehmer im digitalen Telekommunikations- und/oder Datennetz eingerichtet wird. Auf diese Weise läßt sich die im digitalen Telekommunikations- und/oder Datennetz eingerichtete Verbindung auf besonders einfache Weise an die Datenübertragung zwischen der insbesondere als Nebenstellenanlage ausgebildeten ersten Telekommunikationseinheit und dem ersten Telekommunikationsendgerät anpassen, für die ebenfalls ein entsprechender Datenkanal, vorzugsweise ein B-Kanal mit einer Datenrate von 64 kBit/s nach dem ISDN-Standard vorgesehen sein kann. Ein bestehender B-Kanal zwischen dem ersten Telekommunikationsendgerät und der ersten Telekommunikationseinheit muß dann von der ersten Telekommunikationseinheit nur noch über den entsprechenden Netzbetreiber auf das digitale Telekommunikations- und/oder Datennetz durchgeschaltet werden. Eine Datenumwandlung innerhalb der ersten Telekommunikationseinheit oder beim Netzbetreiber des digitalen Telekommunikations- und/oder Datennetzes zwischen einem Datenformat und einer Datenrate der Übertragung im digitalen Telekommunikations- und/oder Datennetz und einem Datenformat und einer Datenrate der Übertragung zwischen dem ersten Telekommunikationsendgerät und der ersten Telekommunikationseinheit bzw. dem Netzbetreiber des digitalen Telekommunikations- und/oder Datennetzes ist somit nicht erforderlich, so daß Aufwand und Zeit beim Betrieb der Datenverbindung eingespart werden kann.

Ein weiterer Vorteil besteht darin, daß zwischen dem ersten und dem zweiten Telekommunikationsendgerät bei erfolgreich aufgebauter Verbindung Audio- und/oder Videodaten im Vollduplexbetrieb übertragen werden. Auf diese Weise kann beispielsweise über das digitale Telekommunikations- und/oder Datennetz eine vollwertige Telekommunikationsverbindung für Audio- und/oder Videodaten eingerichtet werden.

Ein weiterer Vorteil besteht darin, daß von der ersten Telekommunikationseinheit dasjenige zugängliche Telekommuniketions- und/oder Datennetz zur Einrichtung der Verbindung gewählt wird, das in Abhängigkeit eines zuvor ermittelten Vorhersagewertes für eine Verbindungsdauer die niedrigsten Verbindungskosten für diese Verbindung aufweist. Auf diese Weise können zur Auswahl desjenigen Netzbetreibers mit den für die einzurichtende Verbindung geringsten Verbindungskosten auch Tarifänderungen, die während der Dauer der Verbindung auftreten, berücksichtigt werden.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild einer Anordnung verschiedener Telekommunikations- und/oder Datennetze zur Verbindung zweier Telekommunikationsendgeräte, Figur 2 einen Ablaufplan für die Auswahl des für eine Verbindung zwischen den Telekommunikationsendgeräten preisgünstigsten Telekommunikations- und/oder Datennetzes, Figur 3 ein Blockschaltbild einer Datenverbindung über ein digitales Datennetz, Figur 4 ein Blockschaltbild einer Nebenstellenanlage und Figur 5 einen Ablaufplan für einen Verbindungsaufbau über das digitale Datennetz.

### Beschreibung des Ausführungsbeispiels

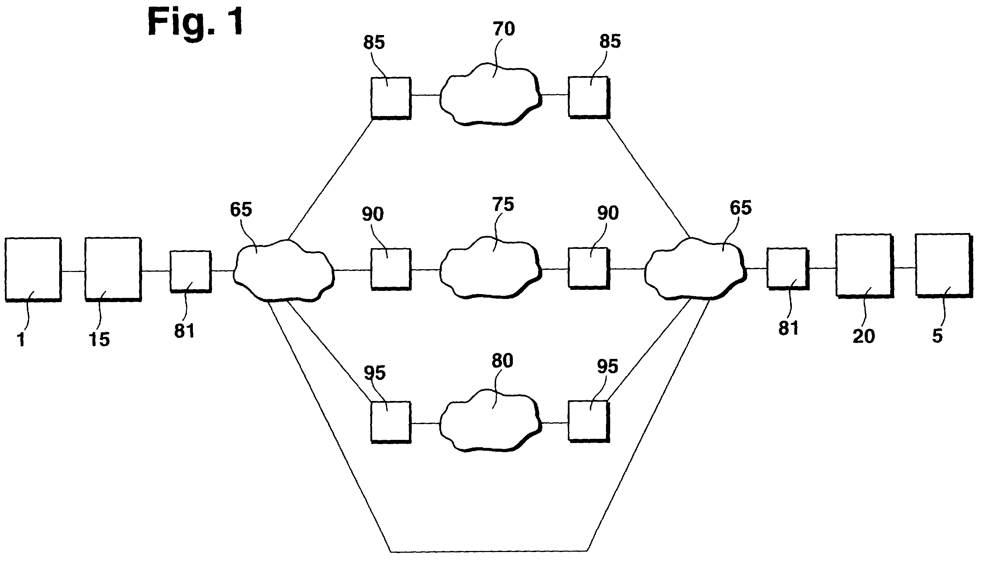

In Figur 1 kennzeichnet 1 ein erstes Telekommunikationsendgerät, das über eine erste Telekommunikationseinheit 15, die insbesondere als Nebenstellenanlage ausgebildet sein kann, und einen ersten Netzbetreiber 81 an ein erstes Telekommunikations- und/oder Datennetz 65 angeschlossen ist. Die erste Telekommunikationseinheit 15 kann an das erste Telekommunikationsendgerät 1 angeschlossen oder in das erste Telekommunikationsendgerät 1 integriert sein. An das erste Telekommunikations- und/oder Datennetz 65 ist ein zweiter Netzbetreiber 85, ein dritter Netzbetreiber 90 und ein vierter Netzbetreiber 95 angeschlossen. Der zweite Netzbetreiber 85 ist an ein zweites Telekommunikations- und/oder Datennetz 70 angeschlossen. Der dritte Netzbetreiber 90 ist an ein drittes Telekommunikations- und/oder Datennetz 75 angeschlossen. Der vierte Netzbetreiber 95 ist an ein viertes Telekommunikations- und/oder Datennetz 80 angeschlossen. In Figur 1 kennzeichnet 5 ein zweites Telekommunikationsendgerät, das über eine zweite Telekommunikationseinheit 20, insbesondere eine Nebenstellenanlage und den ersten Netzbetreiber 81 an das erste Telekommunikations- und/oder Datennetz 65 angeschlossen ist. Somit besteht auch vom zweiten Telekommunikationsendgerät 5 über das erste Telekommunikations- und/oder Datennetz 65 und den zweiten Netzbetreiber 85 eine Verbindung zum zweiten Telekommunikations- und/oder Datennetz 70. Ebenfalls besteht für das zweite Telekommunikationsendgerät 5 über das erste Telekommunikations- und/oder Datennetz 65 eine Verbindung über den dritten Netzbetreiber 90 zum dritten Telekommunikations- und/oder Datennetz 75. Weiterhin besteht für das zweite Telekommunikationsendgerät 5 über das erste Telekommunikations- und/oder Datennetz 65 ebenfalls eine Verbindung über den vierten Netzbetreiber 95 zum vierten Telekommunikations- und/oder Datennetz 80.

Am ersten Telekommunikationsendgerät 1 soll nun das zweite Telekommunikationsendgerät 5 angewählt werden. Dazu wird am ersten Telekommunikationsendgerät 1 die Rufnummer des zweiten Telekommunikationsendgerätes 5 eingegeben, die für einen Verbindungsaufbau über das erste Telekommunikations-und/oder Datennetz 65 zwischen dem ersten Telekommunikationsendgerät 1 und dem zweiten Telekommunikationsendgerät 5 erforderlich ist. In der ersten Telekommunikationseinheit 15 wird vor dem Verbindungsaufbau geprüft, über welches der verschiedenen Telekommunikations- und/oder Datennetze 65, 70, 75, 80 eine Verbindung zu dem angewählten Teilnehmer, also zu dem zweiten Telekommunikationsendgerät 5 mit minimalen Verbindungskosten einrichtbar ist. Von der ersten Telekommunikationseinheit 15 wird dann ein Verbindungsaufbau über denjenigen Netzbetreiber 81, 85, 90, 95 zum angewählten Teilnehmer eingeleitet, der Audio- und/oder Videodaten über das ihm zugeordnete Telekommunikations- und/oder Datennetz 65, 70, 75, 80 mit den geringsten Verbindungskosten zwischen dem ersten Telekommunikationsendgerät 1 und dem angewählten Teilnehmer, d.h. dem zweiten Telekommunikationsendgerät 5 überträgt. Dabei wird von der ersten Telekommunikationseinheit 15 ein Telekommunikations- und/oder Datennetz 65, 70, 75, 80 zur Einrichtung der Verbindung gewählt, das in der ersten Telekommunikationseinheit 15 auch als für das erste Telekommunikationsendgerät 1 zugänglich bekannt ist. Die erste Telekommunikationseinheit 15 wählt dann dasjenige zugängliche Telekommunikations- und/oder Datennetz 65, 70, 75, 80, das in Abhängigkeit der aktuellen Uhrzeit und/oder der Entfernung zwischen dem ersten Telekommunikationsendgerät 1 und dem zweiten Telekommunikationsendgerät 5 die niedrigsten Verbindungskosten für diese Verbindung aufweist. Dabei sind die Informationen über die Zugänglichkeit der verschiedenen Telekommunikations- und/oder Datennetze 65, 70, 75, 80 für das erste Telekommunikationsendgerät 1 und die Verbindungskosten der Netzbetreiber 81, 85, 90,95 für die verschiedenen zugänglichen Telekommunikations- und/oder Datennetze 65, 70, 75, 80 für verschiedene Uhrzeiten und/oder Entfernungen zwischen Teilnehmern einer Verbindung in der ersten Telekommunikationseinheit 15 gespeichert. Informationen über die Zugänglichkeit der verschiedenen Telekommunikations- und/oder Datennetze 65, 70, 75, 80 für das erste Telekommunikationsendgerät 1 sowie die Verbindungskosten der Netzbetreiber 81, 85, 90, 95 für die verschiedenen zugänglichen Telekommunikations- und/oder Datennetze 65, 70, 75, 80 können in der ersten Telekommunikationseinheit 15 durch Übertragung der entsprechenden Informationen von den Netzbetreibern 81, 85, 90, 95 an die erste Telekommunikationseinheit 15 über dasjenige Telekommunikations- und/oder Datennetz 65, 70, 75, 80 aktualisiert werden, an das die erste Telekommunikationseinheit 15 angeschlossen ist. Für den Fall, daß die erste Telekommunikationseinheit 15 für die Verbindung zwischen dem ersten Telekommunikationsendgerät 1 und dem zweiten Telekommunikationsendgerät 5 ein von dem ersten Telekommunikations- und/oder Datennetz 65 verschiedenes Telekommunikations- und/oder Datennetz 70, 75, 80 auswählt, fügt die erste Telekommunikationseinheit 15 vor die Rufnummer des angewählten Teilnehmers eine Vorwahl für dasjenige Telekommunikations- und/oder Datennetz 70, 75, 80 ein, durch das die Verbindung zu dem angewählten Teilnehmer mit den geringsten Verbindungskosten eingerichtet wird. Die Verbindung kann dann über dieses Telekommunikations- und/oder Datennetz 70, 75, 80 vom zugeordneten Netzbetreiber 85, 90, 95 aufgebaut werden. Ist hingegen die Verbindung über das erste Telekommunikations- und/oder Datennetz 65 mit den geringsten Verbindungskosten versehen, so ist keine spezielle Vorwahl zur Einwahl in das erste Telekommunikations- und/oder Datennetz 65 erforderlich.

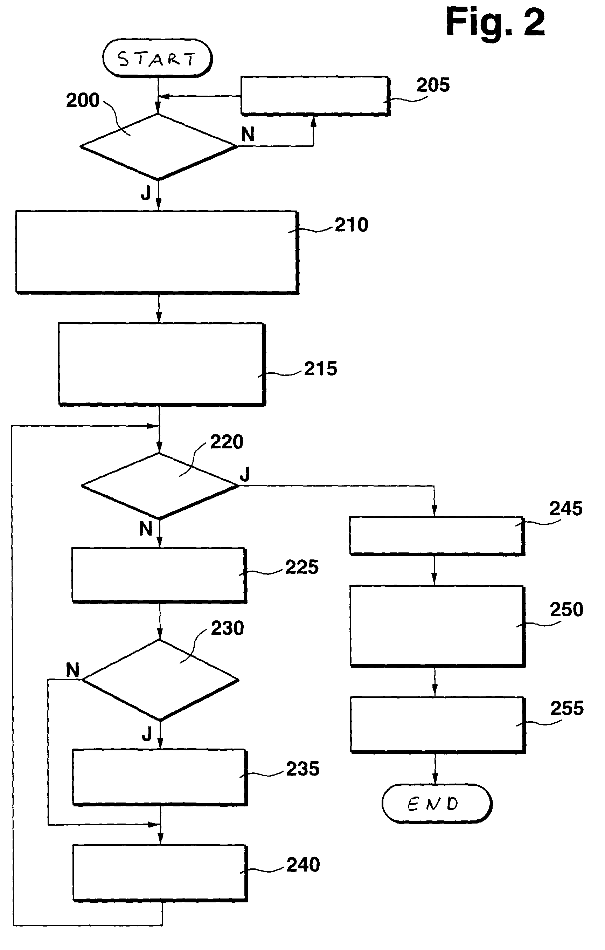

In Figur 2 ist ein Ablaufplan dargestellt, den eine Steuerung der ersten Telekommunikationseinheit 15 für den Aufbau einer Verbindung zwischen dem ersten Telekommunikationsendgerät 1 und dem zweiten Telekommunikationsendgerät 5 abarbeitet. Bei einem Programmpunkt 200 prüft die Steuerung der Telekommunikationseinheit 15, ob durch das erste Telekommunikationsendgerät 1 eine Anwahl erfolgt. Ist dies der Fall, so wird zu einem Programmpunkt 210 verzweigt, andernfalls wird zu einem Programmpunkt 205 verzweigt. Bei Programmpunkt 205 durchläuft die Steuerung der ersten Telekommunikationseinheit 15 eine Warteschleife. Anschließend wird zu Programmpunkt 200 zurückverzweigt. Bei Programmpunkt 210 wertet die Steuerung der ersten Telekommunikationseinheit 15 die am ersten Telekommunikationsendgerät 1 eingegebene Rufnummer aus und ermittelt die aktuelle Zeit und Entfernung zwischen dem ersten Telekommunikationsendgerät 1 und dem angewählten Teilnehmer, der in diesem Beispiel das zweite Telekommunikationsendgerät 5 sein soll. Die Steuerung der ersten Telekommunikationseinheit 15 ermittelt weiterhin eine Maximalanzahl der aktuell für das erste Telekommunikationsendgerät 1 zugänglichen Telekommunikations- und/oder Datennetze 65, 70, 75, 80. Sind alle in Figur 1 dargestellten Telekommunikations- und/oder Datennetze 65, 70, 75, 80 in der ersten Telekommunikationseinheit 15 als für das erste Telekommunikationsendgerät 1 zugänglich gemeldet, so erhält diese Maximalanzahl den Wert 4. Anschließend wird eine Zählvariable von der Steuerung der ersten Telekommunikationseinheit 15 mit der Zahl 1 initialisiert. Anschließend wird zu einem Programmpunkt 215 verzweigt. Bei Programmpunkt 215 ermittelt die Steuerung der ersten Telekommunikationseinheit 15 die aktuellen Verbindungskosten für eine Verbindung zwischen dem ersten Telekommunikationsendgerät 1 und dem zweiten Telekommunikationsendgerät 5 über das erste Telekommunikations- und/oder Datennetz 65. Anschließend initialisiert die Steuerung der ersten Telekommunikationseinheit 15 eine Variable für die minimalen Verbindungskosten mit dem Wert dieser Verbindungskosten und eine Indexvariable mit dem Wert der Zählvariablen. Anschließend wird die Zählvariable um 1 erhöht. Anschließend wird zu einem Programmpunkt 220 verzweigt. Bei Programmpunkt 220 prüft die Steuerung der ersten Telekommunikationseinheit 15, ob die Zählvariable größer als die Maximalanzahl ist. Ist dies der Fall, so wird zu einem Programmpunkt 245 verzweigt, andernfalls wird zu einem Programmpunkt 225 verzweigt. Bei Programmpunkt 225 ermittelt die Steuerung der ersten Telekommunikationseinheit 15 die Verbindungskosten für die aktuell gewünschte Verbindung über das nächste, durch die Zählvariable indizierte Telekommunikations- und/oder Datennetz.Anschließend wird zu einem Programmpunkt 230 verzweigt. Bei Programmpunkt 230 prüft die Steuerung der ersten Telekommunikationseinheit 15, ob die Verbindungskosten für das mit der Zählvariablen indizierte Telekommunikations- und/oder Datennetz kleiner sind, als der in der Variablen für minimale Verbindungskosten gespeicherte Wert. Ist dies der Fall, so wird zu einem Programmpunkt 235 verzweigt, andernfalls wird zu einem Programmpunkt 240 verzweigt. Bei Programmpunkt 235 wird die Variable für minimale Verbindungskosten mit dem Wert für die geringeren Verbindungskosten und die Indexvariable mit dem Wert der Zählvariablen von der Steuerung der ersten Telekommunikationseinheit 15 aktualisiert. Anschließend wird zu Programmpunkt 240 verzweigt. Bei Programmpunkt 240 wird die Zählvariable um 1 erhöht. Anschließend wird zu Programmpunkt 220 zurückverzweigt. Bei Programmpunkt 245 wählt die Steuerung der ersten Telekommunikationseinheit 15 dasjenige Telekommunikations- und/oder Datennetz zum Aufbau einer Verbindung zwischen dem ersten Telekommunikationsendgerät 1 und dem angewählten zweiten Telekommunikationsendgerät 5 aus, das durch die Index-Variable indiziert ist. Anschließend wird zu einem Programmpunkt 250 verzweigt. Bei Programmpunkt 250 fügt die Steuerung der ersten Telekommunikationseinheit 15 der am ersten Telekommunikationsendgerät 1 gewählten Rufnummer eine Vorwahl desjenigen Netzbetreibers hinzu, über dessen Telekommunikations- und/oder Datennetz die Verbindung zum zweiten Telekommunikationsendgerät 5 aufgebaut werden soll, sofern für den Verbindungsaufbau nicht das erste Telekommunikations- und/oder Datennetz 65 ausgewählt wurde, mit dem das erste Telekommunikationsendgerät 1 über den ersten Netzbetreiber 81 immer verbunden ist. Handelt es sich bei dem gewählten Telekommunikations- und/oder Datennetz für den Aufbau der Verbindung zum zweiten Telekommunikationsendgerät 5 um das Internet, so wird die am ersten Telekommunikationsendgerät 1 eingegebene Rufnummer von der Steuerung der ersten Telekommunikationseinheit 15 in eine entsprechende Internetadresse des zweiten Telekommunikationsendgerätes 5 umgewandelt. Anschließend wird zu einem Programmpunkt 255 verzweigt. Bei Programmpunkt 255 leitet die Steuerung der ersten Telekommunikationseinheit 15 einen Verbindungsaufbau zum zweiten Telekommunikationsendgerät 5 ein, indem sie die gegebenenfalls neu gebildete Rufnummer über den ersten Netzbetreiber 81 an das gewählte Telekommunikations- und/oder Datennetz sendet bzw. dem Netzbetreiber für das Internet die Internetadresse des zweiten Telekommunikationsendgerätes 5 zusendet. Anschließend wird der Programmteil verlassen.

Unter den Verbindungskosten versteht man die pro Zeiteinheit anfallenden Kosten der eingerichteten Telekommunikations-und/oder Datenverbindung. Gegebenenfalls können auch Kosten für den Aufbau und/oder den Abbruch der Telekommunikations- und/oder Datenverbindung in den Verbindungskosten enthalten sein.

Die erste Telekommunikationseinheit 15 kann auch in das erste Telekommunikationsendgerät 1 integriert sein, genauso wie die zweite Telekommunikationseinheit 20 in das zweite Telekommunikationsendgerät 5 integriert sein kann. Die erste Telekommunikationseinheit 15 kann jedoch auch getrennt vom ersten Telekommunikationsendgerät 1 angeordnet sein, genauso wie auch die zweite Telekommunikationseinheit 20 getrennt vom zweiten Telekommunikationsendgerät 5 angeordnet sein kann. Die zweite Telekommunikationseinheit 20 kann die zuvor beschriebene Funktionalität der ersten Telekommunikationseinheit 15 aufweisen, so daß in der beschriebenen Weise auch eine Verbindung vom zweiten Telekommunikationsendgerät 5 über dasjenige Telekommunikations- und/oder Datennetz 65, 70, 75, 80 zum ersten Telekommunikationsendgerät 1 aufgebaut werden kann, dessen Verbindungskosten ein Minimum bilden.

In der ersten Telekommunikationseinheit 15 und gegebenenfalls auch in der zweiten Telekommunikationseinheit 20 kann jeweils eine Zuordnungstabelle abgespeichert sein, in der für die verschiedenen, vom jeweiligen Telekommunikationsendgerät 1, 5 zugänglichen Telekommunikations- und/oder Datennetze 65, 70, 75, 80 von deren zugehörigen Netzbetreibern 81, 85, 90, 95 festgelegte Verbindungskosten pro Zeiteinheit abgelegt sind. Die Verbindungskosten pro Zeiteinheit können dabei je nach dem Zeitpunkt, zu dem eine Verbindung gewünscht wird, und/oder der Entfernung zwischen den Verbindungsteilnehmern variieren, so daß die Verbindungskosten pro Zeiteinheit in der Zuordnungstabelle verschiedenen Zeiten für die Einrichtung der Verbindung und/oder verschiedenen Entfernungen zwischen den Verbindungsteilnehmern zugeordnet sind. Bei einem Verbindungswunsch werden dann aus der Zuordnungstabelle von der jeweiligen Telekommunikationseinheit 15, 20 die Verbindungskosten ermittelt, die für den Zeitpunkt des Verbindungswunsches und/oder die Entfernung zwischen den gewünschten Verbindungsteilnehmern minimal sind. Da die Verbindungskosten in der Zuordnungstabelle immer auch dem entsprechenden Netzbetreiber 81, 85, 90, 95 zugeordnet sind, kann die entsprechende Telekommunikationseinheit 15, 20 dann denjenigen Netzbetreiber auswählen, der für die gewünschte Verbindung die geringsten Verbindungskosten pro Zeiteinheit aufweist.

Zusätzlich kann vorgesehen sein, daß von der ersten Telekommunikationseinheit 15 dasjenige zugängliche Telekommunikations- und/oder Datennetz 65, 70, 75, 80 zur Einrichtung der Verbindung gewählt wird, das in Abhängigkeit eines zuvor ermittelten Vorhersagewertes für eine Verbindungsdauer die niedrigsten Verbindungskosten für diese Verbindung aufweist. Dieser Vorhersagewert kann beispielsweise aus dem Mittelwert der Verbindungsdauer mindestens zweier zuvor mit dem ersten Telekommunikationsendgerät 1 eingerichteter Verbindungen ermittelt werden. Diese Verbindungsdauern können ebenfalls in der ersten Telekommunikationseinheit 15 gespeichert sein. Je mehr solcher Verbindungsdauern zuvor eingerichteter Verbindungen in der ersten Telekommunikationseinheit 15 gespeichert und für die Bildung des Mittelwertes als Vorhersagewert verwendet werden, um so genauer läßt sich die voraussichtliche Verbindungsdauer für die nächste einzurichtende Verbindung vorhersagen. Die Bildung dieses Mittelwertes erfolgt dabei durch die Summierung der Verbindungsdauern der zuvor eingerichteten Verbindungen und Division der gebildeten Summe durch die Anzahl der zuvor eingerichteten Verbindungen. Durch Bildung dieses Mittelwertes als Vorhersagewert werden somit die Gesprächsgewohnheiten eines Benutzers des ersten Telekommunikationsendgerätes 1 für die Auswahl des Netzbetreibers mit den niedrigsten Verbindungskosten für die nächste einzurichtende Verbindung berücksichtigt. Auf diese Weise können also auch Änderungen von Verbindungskosten während der Dauer der Verbindung in Abhängigkeit der Uhrzeit für den Beginn der einzurichtenden Verbindung berücksichtigt werden. Zusätzlich können sich die Verbindungskosten während der Dauer der einzurichtenden Verbindung auch in Abhängigkeit der Entfernung zwischen den gewünschten Verbindungsteilnehmern ändern, so daß zur Ermittlung des Netzbetreibers mit den niedrigsten Verbindungskosten auch die Entfernung zwischen den gewünschten Verbindungsteilnehmern der einzurichtenden Verbindung berücksichtigt werden kann. Auf diese Weise läßt sich mit einer vglw. großen Wahrscheinlichkeit derjenige Netzbetreiber mit den für die einzurichtende Verbindung niedrigsten Verbindungskosten auswählen. Für den Fall, daß keine Verbindungsdauern von zuvor eingerichteten Verbindungen vorliegen, beispielsweise bei Erstinbetriebnahme des ersten Telekommunikationsendgerätes 1, kann ein in der ersten Telekommunikationseinheit 15 voreingestellter Wert als Vorhersagewert für die Verbindungsdauer der als nächstes einzurichtenden Verbindung gewählt werden. Dieser voreingestellte Wert kann ein aus der Literatur bekannter Wert für die mittlere Dauer von Verbindungen sein. Sobald jedoch Verbindungen mit dem ersten Telekommunikationsendgerät 1 stattgefunden haben, können die entsprechenden Verbindungsdauern in der ersten Telekommunikationseinheit 15 abgespeichert und zur Ermittlung des Mittelwertes als Vorhersagewert für eine nachfolgende einzurichtende Verbindung verwendet werden, so daß auf diese Weise die individuellen Gesprächs- oder Verbindungsgewohnheiten des Benutzers des ersten Telekommunikationsendgerätes 1 berücksichtigt werden können.

Die Telekommunikationseinheit 15, 20 kann auch als Vorschaltgerät ausgebildet sein, das zwischen einen Telekommunikationsanschluß als Anschluß zum ersten Telekommunikations- und/oder Datennetz 65 und das Telekommunikationsendgerät 1, 5 geschaltet wird. Im Fall der Verwendung einer Nebenstellenanlage muß die Telekommunikationseinheit 15, 20 nicht mit der Nebenstellenanlage identisch oder in diese integriert sein, sondern kann auch wiederum als entsprechendes Vorschaltgerät zwischen die Nebenstellenanlage und den Telekommunikationsanschluß geschaltet sein.

Zur Ermittlung der minimalen Verbindungskosten bei einem vom ersten Telekommunikationsendgerät 1 augehenden Verbindungswunsch sollte in der ersten Telekommunikationseinheit 15 zur Ermittlung der minimalen Verbindungskosten in Abhängigkeit des Zeitpunktes zur Einrichtung der Verbindung und/oder der Entfernung zwischen dem ersten Telekommunikationsendgerät 1 und dem gewünschten Verbindungsteilnehmer die aktuelle Uhrzeit und/oder das Ortsnetz des ersten Telekommunikations-und/oder Datennetzes 65, an das das erste Telekommunikationsendgerät 1 angeschlossen ist, und die Entfernung dieses Ortsnetzes zu allen anderen Ortsnetzen, in denen vom ersten Telekommunikationsendgerät 1 über eines der Telekommunikations- und/oder Datennetze 65, 70, 75, 80 ein Verbindungsteilnehmer erreichbar ist, bekannt sein.

Ist eines der Telekommunikations- und/oder Datennetze 65, 70, 75, 80 als Internet ausgbildet, so können die anfallenden Verbindungskosten auch unabhängig vom Zeitpunkt der Einrichtung der Verbindung und/oder der Entfernung zwischen den gewünschten Verbindungsteilnehmern sein.

Die Ermittlung der Uhrzeit in der ersten Telekommunikationseinheit 15 kann beispielsweise durch eine in die erste Telekommunikationseinheit 15 integrierte Quarzuhr erfolgen, deren Uhrzeit beispielsweise über eine Tastatur und ein Display an der ersten Telekommunikationseinheit 15 vom Benutzer eingegeben werden kann. Die Eingabe der Uhrzeit kann jedoch auch auf andere Weise erfolgen und beispielsweise auch vom ersten Netzbetreiber 81 des ersten Telekommunikations- und/oder Datennetzes 65 an die erste Telekommunikationseinheit 15 übertragen werden.

Das Ortsnetz, an das das erste Telekommunikationsendgerät 1 angeschlossen ist, kann der ersten Telekommunikationseinheit 15, abgesehen von einer Direkteingabe über die gegebenenfalls vorhandene Tastatur der ersten Telekommunikationseinheit 15, auch wiederum vom ersten Netzbetreiber 81 des ersten Telekommunikations- und/oder Datennetzes 65 beispielsweise in Form der Vorwahl dieses Ortsnetzes zur Verfügung gestellt werden. Die Kenntnis des Ortsnetzes des ersten Telekommunikationsendgerätes 1 ist für die erste Telekommunikationseinheit 15 zur Ermittlung der Entfernung zu einem anderen Ortsnetz, in dem sich der vom ersten Telekommunikationsendgerät 1 angewählte Zielteilnehmer befindet, erforderlich. Die Entfernungen zwischen dem Ortsnetz des ersten Telekommunikationsendgerätes 1 und den Ortsnetzen möglicher Zielteilnehmer, die vom ersten Telekommunikationsendgerät 1 aus angewählt werden können, können beispielsweise auf einem Speichermedium, insbesondere einer CD-ROM gespeichert werden und von diesem Speichermedium in den Speicher der ersten Telekommunikationseinheit 15 heruntergeladen werden, sofern die erste Telekommunikationseinheit 15 über einen Eingabeschacht für ein solches Speichermedium verfügt. Verfügt die erste Telekommunikationseinheit 15 über einen solchen Eingabeschacht, so kann auf das Herunterladen der Entfernungen in den Speicher der ersten Telekommunikationseinheit 15 verzichtet werden und die Entfernungsdaten bei Bedarf jedesmal direkt aus dem in den Eingabeschacht eingelegten Speichermedium ausgelesen werden. Es kann jedoch wiederum auch vorgesehen sein, daß die Entfernungen bzw. die Entfernungsdaten der ersten Telekommunikationseinheit 15 vom ersten Netzbetreiber 81 des ersten Telekommunikations- und/oder Datennetzes 65 zur Verfügung gestellt werden.

In der ersten Telekommunikationseinheit 15 sollte bekannt sein, welche Netzbetreiber 81, 85, 90, 95 für das erste Telekommunikationsendgerät 1 zugänglich sind. Dabei können die Netzbetreiber der für das erste Telekommunikationsendgerät 1 zugänglichen Telekommunikations- und/oder Datennetze der ersten Telekommunikationseinheit 15 über das erste Telekommunikations- und/oder Datennetz 65 mitteilen, ob sie für das erste Telekommunikationsendgerät 1 zugänglich sind. Die für das erste Telekommunikationsendgerät 1 zugänglichen Telekommunikations- und/oder Datennetze bzw. deren Netzbetreiber werden dann in der ersten Telekommunikationseinheit 15 abgespeichert. Gegebenenfalls könnte der Benutzer auch die für das erste Telekommunikationsendgerät 1 zugänglichen Telekommunikations- und/oder Datennetze direkt über die gegebenenfalls vorhandene Tastatur an der ersten Telekommunikationseinheit 15 eingeben. Dies kann beispielsweise mittels jeweils eines Paßwortes geschehen, das dem Benutzer bei Vertragsabschluß von dem jeweiligen Netzbetreiber mitgeteilt wird.

Die Verbindungskosten für die einzelnen, dem ersten Telekommunikationsendgerät 1 zugänglichen Telekommunikations- und/oder Datennetze können, gegebenenfalls in Abhängigkeit vom Zeitpunkt und/oder der Entfernung der einzurichtenden Verbindung der ersten Telekommunikationseinheit 15 von den entsprechenden Netzbetreibern über das erste Telekommunikations- und/oder Datennetz 65 mitgeteilt und auf gleiche Weise in der ersten Telekommunikationseinheit 15 auch aktualisiert werden.

Eine Eingabe- und/oder Aktualisierung der Verbindungskosten kann jedoch auch mittels eines Speichermediums, beispielsweise einer CD-ROM erfolgen, die in einen Eingabeschacht der ersten Telekommunikationseinheit 15 eingelegt und dort von der ersten Telekommunikationseinheit 15 gelesen werden kann. Die Verbindungskostendaten können dabei, wie bereits beschrieben, entweder von dem Speichermedium in den Speicher der ersten Telekommunikationseinheit 15 heruntergeladen oder bei Bedarf jedesmal direkt aus dem in den Eingabeschacht eingelegten Speichermedium gelesen werden.

Das Ortsnetz eines vom ersten Telekommunikationsendgerät 1 angewählten Zielteilnehmers kann beispielsweise durch die der Rufnummer dieses Zielteilnehmers vorangestellten Vorwahl ermittelt werden, falls eine solche Vorwahl eingegeben wurde. Diese Vorwahl ist von der Vorwahl der verschiedenen Netzbetreiber zu unterscheiden. Andernfalls kann die erste Telekommunikationseinheit 15 aufgrund der fehlenden Vorwahl erkennen, daß es sich bei der gewünschten Verbindung um ein Ortsgespräch handelt.

Eine Dateneingabe an die erste Telekommunikationseinheit 15 kann auch über einen an die erste Telekommunikationseinheit 15 angeschlossenen Personal Computer erfolgen oder durch Eingabe am ersten Telekommunikationsendgerät 1, gegebenenfalls über eine alphanumerische Tastatur oder über einen mit dem ersten Telekommunikationsendgerät 1 verbundenen Personal Computer.

Ist nur ein einziges Telekommunikations- und/oder Datennetz für das erste Telekommunikationsendgerät 1 zugänglich, so kann die erste Telekommunikationseinheit 15 für Verbindungswünsche des ersten Telekommunikationsendgerätes 1 auch nur dieses Telekommunikations- und/oder Datennetz auswählen.

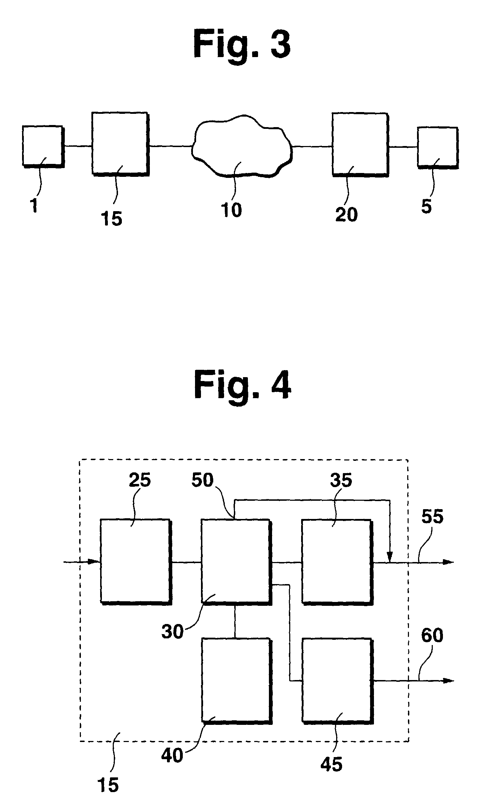

In Figur 3 kennzeichnet 1 wiederum das erste Telekommunikationsendgerät, das über die als Nebenstellenanlage ausgebildete erste Telekommunikationseinheit 15 an ein digitales Datennetz 10 angeschlossen ist. Weiterhin kennzeichnet 5 wiederum das zweite Telekommunikationsendgerät, das über die als Nebenstellenanlage ausgebildete zweite Telekommunikationseinheit 20 ebenfalls an das digitale Datennetz 10 angeschlossen ist. Statt des digitalen Datennetzes 10 kann auch ein anderes analoges oder digitales Telekommunikations- und/oder Datennetz Verwendung finden. Das digitale Datennetz 10 kann beispielsweise das zweite Telekommunikations- und/oder Datennetz 70 gemäß Figur 1 sein, wobei in Figur 3 der Übersichtlichkeit wegen der erste Netzbetreiber 81, das erste Telekommunikations- und/oder Datennetz 65 und der zweite Netzbetreiber 85 nicht dargestellt sind, aber dennoch wie zu Figur 1 beschrieben vorhanden sein sollen.

In Figur 4 ist ein Blockschaltbild der ersten Nebenstellenanlage 15 dargestellt. Dabei sind nur die für das erfindungsgemäße Verfahren relevanten Blöcke in das Blockschaltbild der Figur 4 eingetragen. Somit umfaßt die erste Nebenstellenanlage 15 gemäß Figur 4 eine Empfangseinheit 25, die Audio- und/oder Videodaten vom ersten Telekommunikationsendgerät 1 empfängt. Die Empfangseinheit 25 ist mit einer Auswerteeinheit 30 verbunden, die eine Steuerung der ersten Nebenstellenanlage 15 darstellt und an die ein Analog-/Digitalwandler 35 und ein Speicher 40 angeschlossen sind und die einen Digitalausgang 50 aufweist. Der Digitalausgang 50 ist gemeinsam mit einem Ausgang des Analog-/Digitalwandlers 35 auf einen Nutzdatenkanal 55 geführt, der als B-Kanal mit einer Datenrate von 64 kBit/s gemäß dem ISDN-Standard (Integrated Services Data Network) ausgebildet sein kann. An die Auswerteeinheit 30 ist eine Wählschaltung 45 angeschlossen. Ein Ausgang der Wählschaltung 45 ist auf einen Signalisierungsdatenkanal 60 geführt, der als D-Kanal mit einer Datenrate von 16 kBit/s gemäß dem ISDN-Standard ausgebildet sein kann.

Der Nutzdatenkanal 55 und der Signalisierungsdatenkanal 60 werden von der ersten Nebenstellenanlage 15 über den ersten Netzbetreiber 81, das erste Telekommunikations- und/oder Datennetz 65 und den zweiten Netzbetreiber 85 im digitalen Datennetz 10 eingerichtet, indem die Nutzdaten und die Signalisierungsdaten im entsprechenden Datenformat und mit der entsprechenden Datenrate an das digitale Datennetz 10 abgegeben und von dort an die zweite Nebenstellenanlage 20 bzw. das zweite Telekommunikationsendgerät 5 übertragen werden. Die Nutzdaten entsprechen dabei den Audio- und/oder den Videodaten und die Signalisierungsdaten umfassen Daten für den Verbindungsaufbau, wie beispielsweise Adreß- oder Wählintormationsdaten.

Am ersten Telekommunikationsendgerät 1 werden während einer bestehenden Verbindung analoge Audiodaten beispielsweise in Form von Sprachsignalen in ein Mikrofon eingegeben. Alternativ oder zusätzlich können von einer Videokamera am ersten Telekommunikationsendgerät 1 Bild- oder Videodaten aufgenommen werden. Die Videodaten können dabei analog oder bereits digital von der Kamera aufgenommen werden, je nachdem ob es sich bei der Kamera um eine Analog- oder eine Digitalkamera handelt. Analog vom ersten Telekommunikationsendgerät 1 aufgenommene Audio- und/oder Videodaten können bereits im ersten Telekommunikationsendgerät 1 mittels eines Analog-/Digitalwandlers digitalisiert und in digitaler Form an die erste Nebenstellenanlage 15 übertragen werden. Weist das erste Telekommunikationsendgerät 1 keinen Analog-/Digitalwandler auf, so kann eine Digitalisierung analoger Audio- und/oder Videodaten auch im Analog-/Digitalwandler 35 der ersten Nebenstellenanlage 15 durchgeführt werden. Eine Digitalisierung analoger Audio- und/oder Videodaten ist nur erforderlich, wenn eine Übertragung in einem digitalen Telekommunikations- und/oder Datennetz vorgesehen ist.

Mittels der Übertragung von Audio- und/oder Videodaten über das digitale Datennetz 10 lassen sich zwischen dem ersten Telekommunikationsendgerät 1 und dem zweiten Telekommunikationsendgerät 5 Fernsprech- oder Bildfernsprechverbindungen einrichten. Auch Konferenzschaltungen können auf diese Weise verwirklicht werden.

Das Datennetz 10 soll in diesem Ausführungsbeispiel als Internet ausgebildet sein, kann jedoch auch ein beliebiges anderes digitales oder analoges Telekommunikations- und/oder Datennetz sein. Im Fall der Verwendung eines analogen Telekommunikations- und/oder Datennetzes ist keine vorherige Analog-/Digitalwandlung der zu übertragenden Daten erforderlich. Für eine Datenverbindung über das Internet 10 wählt die erste Nebenstellenanlage 15 zum Verbindungsaufbau zunächst den zweiten Netzbetreiber 85 an, der dann die erste Nebenstellenanlage 15 über das erste Telekommunikationsund/oder Datennetz 65 an das Internet 10 anschließt. Mittels der Auswerteeinheit 30 ermittelt die erste Nebenstellenanlage 15 in Abhängigkeit von im Speicher 40 abgelegten aktuellen Verbindungskosten ein analoges oder digitales Telekommunikations- und/oder Datennetz für die Übertragung der Audio- und/oder Videodaten, das für die Datenübertragung am preisgünstigsten ist. Die Verbindungskosten können dabei auch für verschiedene Netzbetreiber 81, 85, 90, 95 im Speicher 40 vorliegen. Dabei wird für die Übertragung das Internet 10 ausgewählt, wenn dessen Verbindungskosten unter einem vorgegebenen Wert liegen, der als Minimalwert der für die übrigen Verbindungen über andere analoge oder digitale Telekommunikations- und/oder Datennetze anfallenden Verbindungskosten vorliegt. Auf diese Weise wird das Internet 10 für die Übertragung der Audio- und/oder Videodaten ausgewählt, wenn dessen Verbindungskosten im Vergleich zu anderen möglichen Netzverbindungen ein Minimum bildet. Ansonsten wird ein vom Internet 10 verschiedenes analoges oder digitales Telekommunikations- und/oder Datennetz für die Realisierung der Verbindung gewählt, dessen Verbindungskosten für die gewünschte Verbindung ein Minimum bilden.

Somit muß ein Benutzer am ersten Telekommunikationsendgerät 1 nicht selbst entscheiden, welches Daten- und/oder Telekommunikationsnetz er für seine gewünschte Verbindung verwenden soll. Die Auswerteeinheit 30 ermittelt automatisch immer das für die gewünschte Verbindung preisgünstigste von der ersten Nebenstellenanlage 15 zugängliche Telekommunikations- und/oder Datennetz.

Wird für einen Verbindungswunsch des ersten Telekommunikationsendgerätes 1 das Internet 10 als preisgünstigstes ermittelt, so muß eine am ersten Telekommunikationsendgerät 1 eingegebene Rufnummer zur Anwahl eines Teilnehmers in eine entsprechende Internetadresse zur Adressierung des angewählten Teilnehmers im Internet 10 umgewandelt werden. Diese Umwandlung findet ebenfalls in der Auswerteeinheit 30 statt. Die auf diese Weise ermittelte Internetadresse wird dann von der Auswerteeinheit 30 an die Wählschaltung 45 abgegeben. Die Wählschaltung 45 veranlaßt dann die Anwahl des zweiten Netzbetreibers 85 und sendet diesem die Internetadresse des gerufenen Teilnehmers über den Signalisierungsdatenkanal 60 zu, über den das zweite Telekommunikationsendgerät 5 dann durch den zweiten Netzbetreiber 85 adressierbar ist.

Die am ersten Telekommunikationsendgerät 1 eingegebenen Audio- und/oder Videodaten werden an die erste Nebenstellenanlage 15 übertragen und von der dortigen Empfangseinheit 25 empfangen. Liegen die Audio- und/oder Videodaten bereits an einem Ausgang des ersten Telekommunikationsendgerätes 1 in digitalisierter Form vor, so können sie über mindestens einen Datenkanal, der als B-Kanal mit einer Übertragungsrate von 64kBit/s gemäß dem ISDN-Standard ausgebildet sein kann, vom ersten Telekommunikationsendgerät 1 an die erste Nebenstellenanlage 15 übertragen werden.

Von der ersten Nebenstellenanlage 15 können die digitalisierten Audio- und/oder Videodaten über das Internet 10 an das zweite Telekommunikationsendgerät 5 übertragen werden, sofern es dem angewählten Teilnehmer zugeordnet ist. Dabei können die digitalisierten Audio- und/oder Videodaten in Abhängigkeit der Funktionalität des zweiten Telekommunikationsendgerätes 5 entweder direkt oder indirekt, beispielsweise mittels der zweiten Nebenstellenanlage 20 übertragen werden. Eine direkte Übertragung ohne die zweite Nebenstellenanlage 20 ist möglich, wenn das zweite Telekommunikationsendgerät 5 über einen Digital-/Analogwandler verfügt, um die empfangenen digitalisierten Audio- und/oder Videodaten in analoge, beispielsweise an einem Lautsprecher bzw. einem Monitor des zweiten Telekommunikationsendgerätes 5 wiedergebbare Daten umzuwandeln. Verfügt das zweite Telekommunikationsendgerät 5 nicht über einen Digital-/Analogwandler, so kann eine entsprechende Digital-/Analogwandlung auch in der gemäß Figur 3 zwischen das Internet 10 und das zweite Telekommunikationsendgerät 5 geschalteten zweiten Nebenstellenanlage 20 erfolgen. Nach der Digital-/Analogwandlung in der zweiten Nebenstellenanlage 20 können dann analoge Audio- und/oder Videodaten zur Wiedergabe an das entsprechend adressierte zweite Telekommunikationsendgerät 5 abgegeben werden. Die über das Internet 10 übertragene Internetadresse des zweiten Telekommunikationsendgerätes 5 wird dabei in der zweiten Nebenstellenanlage 20 von einer dort befindlichen Auswerteeinheit in die Rufnummer des zweiten Telekommunikationsendgerätes 5 umgewandelt und das zweite Telekommunikationsendgerät 5 entsprechend angewählt. Nach erfolgreichem Verbindungsaufbau können die Audio- und/oder Videodaten von der zweiten Nebenstellenanlage 20 beispielsweise über eine ISDN-Verbindung an das zweite Telekommunikationsendgerät 5 übertragen werden.

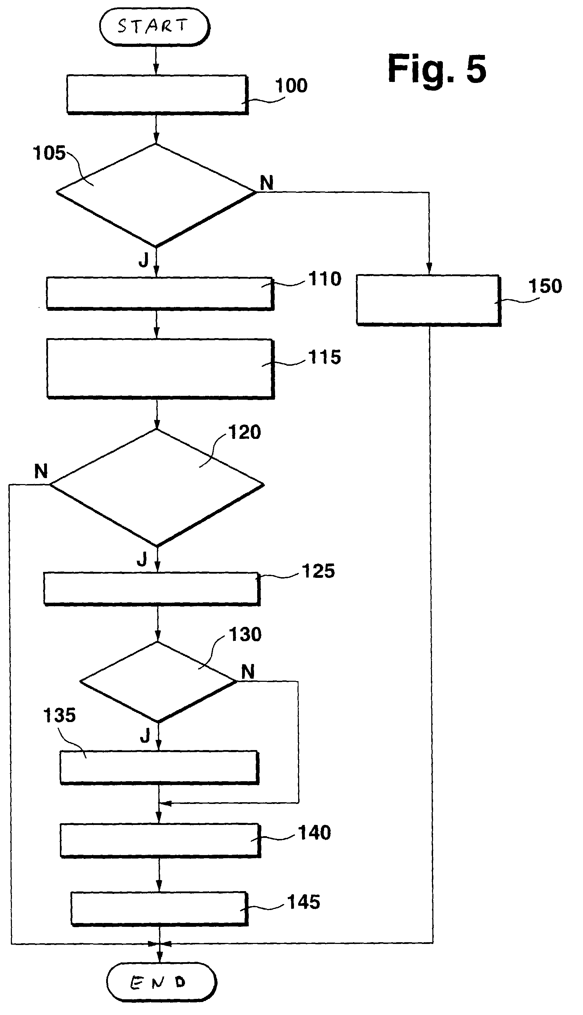

Gemäß Figur 5 ist ein Ablaufplan für die Funktionsweise des erfindungsgemäßen Verfahrens dargestellt. Bei einem Programmpunkt 100 wird am ersten Telekommunikationsendgerät 1 eine Rufnummer eingegeben. Die Rufnummer wird an die erste Nebenstellenanlage 15 übertragen. Bei einem Programmpunkt 105 prüft die Auswerteeinheit 30, ob die aktuellen Verbindungskosten pro Zeiteinheit für eine Datenübertragung über das Internet 10 an den angewählten Teilnehmer ein Minimum bilden. Bilden die Verbindungskosten ein Minimum, so wird zu Programmpunkt 110 verzweigt, andernfalls wird zu Programmpunkt 150 verzweigt. Bei Programmpunkt 110 stellt die Auswerteeinheit 30 eine Verbindung zu dem zweiten Netzbetreiber 85 über das erste Telekommunikations- und/oder Datennetz 65 her, wobei der zweite Netzbetreiber 85 die erste Nebenstellenanlage 15 über das erste Telekommunikations- und/oder Datennetz 65 an das Internet 10 anschaltet. Weiterhin wandelt die Auswerteeinheit 30 nach erfolgreichem Anschluß der ersten Nebenstellenanlage 15 an das Internet 10 die vom ersten Telekommunikationsendgerät 1 empfangene Rufnummer in die Internetadresse des zweiten Telekommunikationsendgerätes 5 des anzuwählenden Teilnehmers um und veranlaßt die Wählschaltung 45 über das erste Telekommunikations- und/oder Datennetz 65 zur Anwahl des zweiten Telekommunikationsendgerätes 5 mittels der Internetadresse. Dazu richtet die Wählschaltung 45 über das erste Telekommunikations- und/oder Datennetz 65 im Internet 10 einen Signalisierungsdatenkanal 60, beispielsweise in Form eines D-Kanals mit einer Übertragungsrate von 16kBit/s gemäß dem ISDN-Standard ein und wählt über das Internet 10 das zweite Telekommunikationsendgerät 5 an. Dieser durch die Wählschaltung 45 eingeleitete Verbindungsaufbau erfolgt bei einem Programmpunkt 115. Bei einem Programmpunkt 120 prüft die Auswerteeinheit 30, ob nach einer vorgegebenen Zeit eine Verbindung zu dem zweiten Telekommunikationsendgerät 5 aufgebaut wurde, indem sie beispielsweise versucht, ein Quittierungssignal vom zweiten Telekommunikationsendgerät 5 zu detektierten, wobei entsprechende Empfangseinrichtungen zum Empfang von Daten aus dem Internet 10 in der ersten Nebenstellenanlage 15 gemäß Figur 4 nicht dargestellt sind. Wurde innerhalb der vorgegebenen Zeit eine Verbindung zum zweiten Telekommunikationsendgerät 5 aufgebaut, so wird zu Programmpunkt 125 verzweigt, andernfalls wird der Programmteil verlassen und der Verbindungsaufbau abgebrochen. Beim Programmpunkt 125 wird dem ersten Telekommunikationsendgerät 1 ebenfalls durch in Figur 4 nicht dargestellte Vorrichtungen signalisiert, daß die gewünschte Verbindung aufgebaut wurde. Am ersten Telekommunikationsendgerät 1 kann nun die Eingabe von Audio- und/oder Videodaten erfolgen. Die Audio- und/oder Videodaten werden dann vom ersten Telekommunikationsendgerät 1 an die erste Nebenstellenanlage 15 in analoger und/oder digitaler Form übertragen. Bei einem Programmpunkt 130 prüft die Auswerteeinheit 30, ob eine Digitalisierung von vom ersten Telekommunikationsendgerät 1 in der Empfangseinheit 25 empfangenen Audio- und/oder Videodaten erforderlich ist. Ist dies der Fall, so wird zu einem Programmpunkt 135 verzweigt, andernfalls wird zu einem Programmpunkt 140 verzweigt. Bei Programmpunkt 135 veranlaßt die Auswerteeinheit 30 den Analog-/Digitalwandler 35 zur Digitalisierung analog empfangener Audio- und/oder Videodaten. Bei Programmpunkt 140 veranlaßt die Auswerteeinheit 30 die Einrichtung mindestens eines Nutzdatenkanals 55 über das erste Telekommunikations-und/oder Datennetz 65 im Internet 10 beispielsweise in Form eines B-Kanals mit einer Datenrate von 64kBit/s nach dem ISDN-Standard, über den dann die digitalen Audio- und/oder Videodaten an die zweite Nebenstellenanlage 20 bzw. direkt an das zweite Telekommunikationsendgerät 5 übertragen werden. Dabei werden die digitalen Audio- und/oder Videodaten vom Digitalausgang 50 der Auswerteeinheit 30 und/oder vom Analog-/Digitalwandler 35 abgegeben. Eine Abgabe von digitalen Audio- und/oder Videodaten sowohl vom Digitalausgang 50 der Auswerteeinheit 30 als auch von dem Analog-/Digitalwandler 35 erfolgt dann, wenn vom ersten Telekommunikationsendgerät 1 sowohl analoge als auch digitale Audio- und/oder Videodaten an die erste Nebenstellenanlage 15 übertragen wurden. Die analogen Audiodaten werden dann nach Digitalisierurig vom Analog-/Digitalwandler 35 abgegeben und die digitalen Videodaten vom Digitalausgang 50. Dabei kann es sich um analoge Audiodaten und digitale Videodaten nach Bildaufnahme mit einer digitalen Kamera handeln. Die analogen Audiodaten werden dann nach Digitalisierung vom Analog-/Digitalwandler 35 abgegeben und die digitalen Videodaten vom Digitalausgang 50. Bei einem programmpunkt 145 erfolgt zwischen dem ersten und dem zweiten Telekommunikationsendgerät 1, 5 eine Übertragung von Audio- und/oder Videodaten im Vollduplexbetrieb. Anschließend wird der Programmteil verlassen. Bei Programmpunkt 150 veranlaßt die Auswerteeinheit 30 einen Verbindungsaufbau zum zweiten Telekommunikationsendgerät 5 über ein vom Internet 10 verschiedenes analoges oder digitales Telekommunikations- und/oder Datennetz 65, 75, 80 und für die gewünschte Verbindung die minimalen Verbindungskosten aufweist. Anschließend wird der Programmteil verlassen.

Die erste Nebenstellenanlage 15 und die zweite Nebenstellenanlage 20 können gleich aufgebaut sein, so daß auch vorn zweiten Telekommunikationsendgerät 5 in der beschriebenen Weise ein Verbindungsaufbau über das Internet 10 eingeleitet werden kann. Das erste Telekommunikationsendgerät 1 und das zweite Telekommunikationsendgerät 5 können ebenfalls gleich aufgebaut sein. Es kann jedoch auch vorgesehen sein, daß das zweite Telekommunikationsendgerät 5 als Personalcomputer mit entsprechendem Internetzugang ausgebildet ist, wohingegen das erste Telekommunikationsendgerät 1 lediglich als herkömmliches Telefongerät, ja sogar als Stimulus-Telekommunikationsendgerät mit eingeschränkter Funktionalität ausgebildet sein kann. Bei Ausbildung des zweiten Telekommunikationsendgerätes 5 als Personalcomputer mit Internetzugang ist die Zwischenschaltung der zweiten Nebenstellenanlage 20 zwischen das Internet 10 und das zweite Telekommunikationsendgerät 5 nicht erforderlich.

Das erfindungsgemäße Verfahren ermöglicht die Ausnutzung der vergleichsweise geringen Verbindungskosten für Fernsprechen und/oder Bildfernsprechen im Internet 10. Durch Verwendung der ersten Nebenstellenanlage 15 kann dieser Preisvorteil von allen an die erste Nebenstellenanlage 15 angeschlossenen Telekommunikationsendgeräten genutzt werden. Mit einer Liberalisierung des Telekommunikationsmarktes können verschiedene Netzanbieter für gleiche Verbindungen unterschiedliche Preise verlangen. Sind diese Preise in der ersten Nebenstellenanlage 15 bekannt bzw. im Speicher 40 gespeichert und werden von Zeit zu Zeit aktualisiert, so kann der jeweils preisgünstigste Anbieter für die Verbindung ausgewählt werden.

## Patentansprüche

1. Verfahren zur Übertragung von Audio- und/oder Videodaten zwischen Telekommunikationsendgeräten (1, 5), dadurch gekennzeichnet, daß an einem ersten Telekommunikationsendgerät (1) ein Teilnehmer angewählt wird, daß in einer an das erste Telekommunikationsendgerät (1) angeschlossenen ersten Telekommunikationseinheit (15), insbesondere einer Nebenstellenanlage oder einer in das erste Telekommunikationsendgerät (1) integrierten ersten Telekommunikationseinheit (15) geprüft wird, über welches einer Mehrzahl von verschiedenen Telekommunikations- und/oder Datennetzen (65, 70, 75, 80), mit denen das erste Telekommunikationsendgerät (1) über jeweils einen Netzbetreiber (81, 85, 90, 95) verbindbar ist, eine Verbindung zu dem angewählten Teilnehmer mit minimalen Verbindungskosten einrichtbar ist, und daß von der ersten Telekommunikationseinheit (15) ein Verbindungsaufbau über denjenigen Netzbetreiber (81, 85, 90, 95) zum angewählten Teilnehmer eingeleitet wird, der die Audio- und/oder Video-daten über das ihm zugeordnete Telekommunikations- und/oder Datennetz (65, 70, 75, 80) mit den geringsten Verbindungskosten zwischen dem ersten Telekommunikationsendgerät (1) und dem angewählten Teilnehmer überträgt.

2. Verfahren nach Anspruch 1, dadurch gekennzeichnet, daß von der ersten Telekommunikationseinheit (15) dasjenige zugängliche Telekommunikations- und/oder Datennetz (65, 70, 75, 80) zur Einrichtung der Verbindung gewählt wird, das in Abhängigkeit der aktuellen Uhrzeit und/oder der Entfernung zwischen dem ersten Telekommunikationsendgerät (1) und dem angewählten Teilnehmer die niedrigsten Verbindungskosten für diese Verbindung aufweist.

3. Verfahren nach Anspruch 2, dadurch gekennzeichnet, daß die Verbindungskosten der Netzbetreiber (81, 85, 90, 95) für die verschiedenen zugänglichen Telekommunikations- und/oder Datennetze (65, 70, 75, 80) für verschiedene Uhrzeiten und/oder Entfernungen zwischen Teilnehmern einer Verbindung in der ersten Telekommunikationseinheit (15) gespeichert werden.

4. Verfahren nach Anspruch 3, dadurch gekennzeichnet, daß die Verbindungskosten der Netzbetreiber (81, 85, 90, 95) für die verschiedenen zugänglichen Telekommunikations- und/oder Datennetze (65, 70, 75, 80) in der ersten Telekommunikationseinheit (15) durch Übertragung über das Telekommunikations- und/oder Datennetz (65, 70, 75, 80) aktualisiert werden, an das die erste Telekommunikationseinheit (15) angeschlossen ist.

5. Verfahren nach einem der vorherigen Ansprüche, dadurch gekennzeichnet, daß von der ersten Telekommunikationseinheit (15) vor die Rufnummer des angewählten Teilnehmers eine Vorwahl für dasjenige Telekommunikations- und/oder Datennetz (65, 70, 75, 80) eingefügt wird, durch das die Verbindung zu dem angewählten Teilnehmer mit den geringsten Verbindungskosten eingerichtet wird.

6. Verfahren nach einem der vorherigen Ansprüche, dadurch gekennzeichnet, daß Audio- und/oder Videodaten analog am ersten Telekommunikationsendgerät (1) eingegeben werden und daß die analogen Audio- und/oder Videodaten in der ersten Telekommunikationseinheit (15) digitalisiert werden.

7. Verfahren nach einem der Ansprüche 1 bis 5, dadurch gekennzeichnet, daß Audio- und/oder Videodaten analog am ersten Telekommunikationsendgerät (1) eingegeben werden und daß die analogen Audio- und/oder Videodaten in dem ersten Telekommunikationsendgerät (1) digitalisiert werden.

8. Verfahren nach Anspruch 7, dadurch gekennzeichnet, daß die digitalisierten Audio- und/oder Videodaten über mindestens einen Datenkanal, vorzugsweise einen B-Kanal mit einer Übertragungsrate von 64kBit/s gemäß dem ISDN-Standard (Integrated Services Data Network), vom ersten Telekommunikationsendgerät (1) an die erste Telekommunikationseinheit (15) übertragen werden.

9. Verfahren nach einem der vorherigen Ansprüche, dadurch gekennzeichnet, daß die digitalisierten Audio- und/oder Videodaten über ein digitales Telekommunikations- und/oder Datennetz (10) mit den günstigsten Verbindungskosten an ein zweites Telekommunikationsendgerät (5) des angewählten Teilnehmers mittels einer zweiten Telekommunikationseinheit (20) , insbesondere einer Nebenstellenanlage, übertragen werden.

10. Verfahren nach Anspruch 9, dadurch gekennzeichnet, daß die digitalisierten Audio- und/oder Videodaten vor Abgabe an das zweite Telekommunikationsendgerät (5) in der zweiten Telekommunikationseinheit (20) in analoge Audio- und/oder Videodaten umgewandelt werden.

11. Verfahren nach einem der vorherigen Ansprüche, dadurch gekennzeichnet, daß in der ersten Telekommunikationseinheit (15) eine am ersten Telekommunikationsendgerät (1) eingegebene Rufnummer in eine Adresse des digitalen Telekommunikations- und/oder Datennetzes (10) umgewandelt wird.

12. Verfahren nach einem der vorherigen Ansprüche, dadurch gekennzeichnet, daß von der ersten Telekommunikationseinheit (15) mindestens ein Datenkanal, vorzugsweise ein B-Kanal mit einer Datenrate von 64kBit/s nach dem ISDN-Standard, zur Übertragung der digitalisierten Audio- und/oder Videodaten an den angewählten Teilnehmer im digitalen Telekommunikations- und/oder Datennetz (10) eingerichtet wird.

13. Verfahren nach einem der vorherigen Ansprüche, dadurch gekennzeichnet, daß zwischen dem ersten und dem zweiten Telekommunikationsendgerät (1, 5) bei erfolgreich aufgebauter Verbindung Audio- und/oder Videodaten im Vollduplexbetrieb übertragen werden.

14. Verfahren nach einem der vorherigen Ansprüche, dadurch gekennzeichnet, daß von der ersten Telekommunikationseinheit (15) dasjenige zugängliche Telekommunikations- und/oder Datennetz (65, 70, 75, 80) zur Einrichtung der Verbindung gewählt wird, das in Abhängigkeit eines zuvor ermittelten Vorhersagewertes für eine Verbindungsdauer die niedrigsten Verbindungskosten für diese Verbindung aufweist.

15. Verfahren nach Anspruch 14, dadurch gekennzeichnet, daß der Vorhersagewert aus dem Mittelwert der Verbindungsdauer mindestens zweier zuvor eingerichteter Verbindungen ermittelt wird.

16. Verfahren nach Anspruch 14 oder 15, dadurch gekennzeichnet, daß für den Fall, daß keine Verbindungsdauern von zuvor eingerichteten Verbindungen vorliegen, ein voreingestellter Wert als Vorhersagewert gewählt wird.
